# EUROPÄISCHE PATENTSCHRIFT

(11) **EP 0 353 522 B1**
(45) Veröffentlichungstag und Bekanntmachung des Hinweises auf die Patenterteilung: **29.12.1993**
(21) Anmeldenummer: 89112909.0
(22) Anmeldetag: 14.07.1989
(51) Int. Cl.: B62B 5/04

(54) **Servierwagen, insbesondere für Verkehrsflugzeuge**
Catering trolley, in particular for passenger aircraft
Table roulante, en particulier pour avion de ligne

(30) Priorität: 03.08.1988 DE 8809876 U
(43) Veröffentlichungstag der Anmeldung: 07.02.1990
(73) Patentinhaber: Klotz, Bernd, D-64839 Münster (DE)
(72) Erfinder: Klotz, Bernd, D-64839 Münster (DE)

(56) Entgegenhaltungen:
- EP-A- 0 072 491
- EP-A- 0 332 876
- DE-A- 3 444 799
- DE-U- 8 809 849

## Beschreibung

Die Neuerung bezieht sich auf einen Servierwagen gemäß Oberbegriff des Schutzanspruches 1. Derartige Servierwagen sind bekannt: DE 34 44 799 A1.

Bei diesem Servierwagen wird es für erforderlich gehalten, den Wagen an allen vier Rädern abbremsen zu können, um einen sicheren Stand, z.B. im Flugzeug, zu erreichen. Die Kopplung der an den beiden Stirnseiten des Servierwagens vorgesehenen Bremsvorrichtungen gestaltet sich hierbei sehr aufwendig, zumal die Bremskräfte von der Bedienseite zur entgegengesetzten Seite zu übertragen sind. Noch schwieriger wird die Sache, soweit beide Stirnseiten des Servierwagens als Bedienseite - und zwar unabhängig voneinander - geeignet sein sollen. Aufgabe der Neuerung ist es, eine einfache zuverlässige Kopplung für die Bremsen beider Stirnseiten mit einer guten Möglichkeit zum leichten Wiederlösen der Bremsvorrichtung anzugeben. Diese Aufgabe wird neuerungsgemäß bei dem eingangs genannten Servierwagen in einer ersten Ausführungsform durch die im Kennzeichen des Schutzanspruches 1 angegebenen Merkmale gelöst. Die hier angegebene Lösung ermöglicht es, die Kipphebel der beiden Stirnseiten des Servierwagens jeweils als Bremspedale auszubilden, so daß der Servierwagen von beiden Stirnseiten aus bedient werden kann.

Soweit ein beidseitiges Bedienen des Servierwagens nicht erforderlich ist, und zwar bei den sogenannten half-cart-Servierwagen, können gemäß einer zweiten Ausführungsform beide Kipphebel gleichsinnig angeordnet werden, so daß nur der eine Kipphebel, der Kipphebel der Bedienseite, als Bremspedal ausgebildet wird. Hierbei kann die Kopplungsstange unmittelbar an der Unterseite des Bodens des Servierwagens verlaufen, indem diese jeweils oberhalb der Lagerstellen beider Kipphebel an den Kipphebeln angelenkt wird.

Da beim Betätigen der Kipphebel Reibungskräfte zu überwinden sind - der Kipphebel muß mit der Ubergangslinie seiner beiden Stützflächen an der Unterseite des Bodens entlanggleiten - wird zweckmäßig am Kipphebel eine Rolle vorgesehen, die diesen Gleitvorgang erleichtert. Das Lager dieser Rolle kann hierbei gleichzeitig als Anlenkstelle für die Kopplungsstange vorgesehen werden. Infolge der asymmetrischen Anordnung der beiden Stützflächen des Kipphebels hält sich dieser in der Bremsstellung selbst, indem die Wirklinie der die Bremsstange beaufschlagenden Feder die Stützfläche mit dem größeren Abstand zur Schwenkachse schneidet. Das Wiederlösen der Bremsvorrichtung kann hierbei auf einfache Weise dadurch geschehen, daß die Fußspitze unter dem Bremspedal angesetzt und dann angehoben wird.

Die Bremsvorrichtung ist aber auch bestens geeignet für das zusätzliche Anbringen eines eigenen Bremslösepedals, welches dann direkt neben dem Bremspedal ebenfalls auf der Bremsstange gelagert wird. Ein am Bremslösepedal angelenkter Winkelhebel, der sich an der Unterseite des Bodens des Servierwagens abstützt und der die Drehbewegung des Bremslösepedals umkehrt, dient als Auswerfer für das Bremspedal, indem er mit seinem freien Ende hinter einem Anschlag des Bremspedals liegt.

Ausführungsbeispiele der Neuerung ist in der Zeichnung dargestellt und werden nachstehend näher erläutert. Es zeigen:
- Figur 1: eine erste Ausführungsform mit beidseitiger Bedienung der Bremsvorrichtung,
- Figur 2: eine zweite Ausführungsform mit einseitiger Bedienung der Bremsvorrichtung,
- Figur 3 bis 5: die zusätzliche Anordnung eines Bremslösepedals.

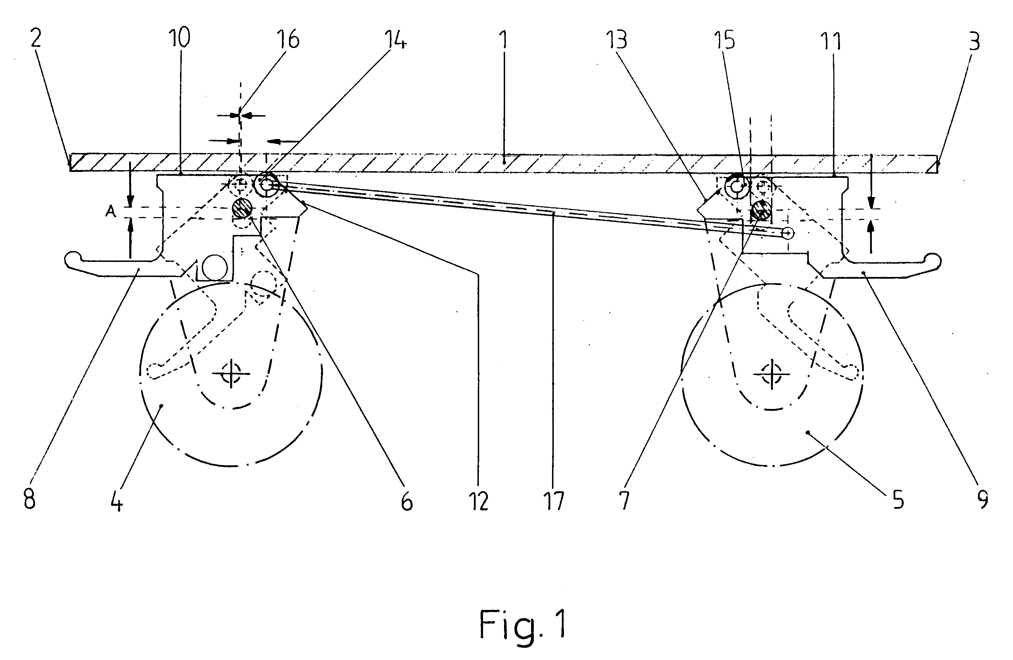

Gemäß Figur 1 ist der eine Bodenplatte 1 besitzende im einzelnen aber nicht dargestellte Servierwagen an jeder Stirnseite 2, 3 mit je zwei Fahrrollen 4, 5 versehen. Diese Fahrrollen 4, 5 sind mittels je einer zur Stirnseite 2, 3 parallel verlaufenden Bremsstange 6, 7 blockierbar, wobei die Bremsstange in senkrechten Führungsschlitzen nach unten verschiebbar ist, im übrigen aber durch die Kraft einer Feder in Richtung Bodenplatte 1 gedrückt wird. Auf jeder Bremsstange 6, 7 ist je ein als Bremspedal 8, 9 ausgebildeter Kipphebel gelagert, der sich in der Fahrstellung des Servierwagens mittels einer Stützfläche 10, 11 an der Unterseite der Bodenplatte 1 abstützt. Jedes Bremspedal besitzt eine zweite Stützfläche 12, 13, die einen etwas größeren Abstand zur Schwenkachse (Bremsstange 6, 7) aufweist. An der Übergangslinie der beiden Stützflächen 10, 12 bzw. 11, 13 ist jeweils eine Rolle 14, 15 vorgesehen, die an der Unterseite der Bodenplatte 1 beim Betätigen des Bremspedals abrollt. Wird z.B. das Bremspedal 8 nach unten gedrückt, so schwenkt dieses um die Bremsstange 6, wobei gleichzeitig die Bremsstange nach unten gedrückt wird, und die Rolle 14 sich an der Unterseite der Bodenplatte 1 nach links bewegt. Die Bremsstange 6 wird hierbei um den Betrag A hinuntergedrückt, was zum Blockieren der Räder ausgenutzt wird. Um diesen Betrag A ist der Abstand der Stützfläche 12 von der Schwenkachse (Bremsstange 6) größer als der Abstand der Stützfläche 10. Ferner sind die Stützflächen 10, 12 derart asymmetrisch angeordnet, daß die Wirklinie 16, der die Bremsstange 6 beaufschlagenden Feder diesseits der Stützfläche 12 liegt, so daß sich das Bremspedal 8 in dieser Stellung selbst halten kann. Die Bremsstellung ist in Figur 1 eingestrichelt.

Wie aus der Figur 1 bereits ersichtlich, entspricht die Anordnung des als Bremspedal 9 ausgebildeten Kipphebels der Stirnseite 3 genau der Anordnung des Bremspedals 8 der Stirnseite 2. Die beiden Kipphebel (Bremspedal 8 und Bremspedal 9) sind lediglich gegensinnig gelagert. Zur Zwangskopplung der beiden Kipphebel ist eine zug- und druckbelastbare Stange 17 vorgesehen, die einerseits an der Rolle 14 des linken Bremspedals 8 - also oberhalb der Schwenkachse (Bremsstange 6) - und andererseits am rechten Bremspedal 9 unterhalb dessen Schwenkachse angelenkt ist. Es ist ohne weiteres klar, daß unabhängig davon, welches Bremspedal 8 oder 9 betätigt wird, das andere Bremspedal dieser Betätigung folgen muß.

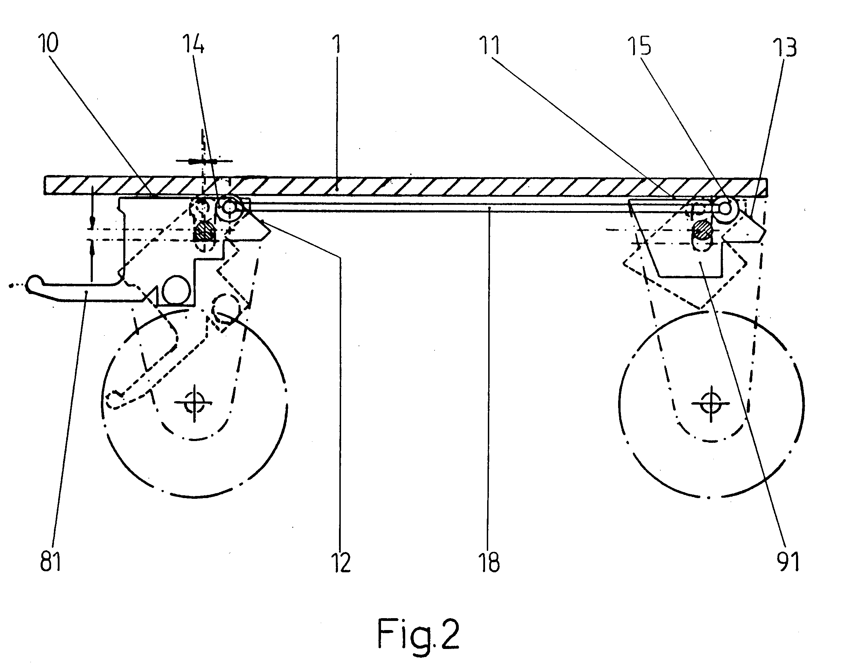

Gemäß Figur 2 ist der hier dargestellte Servierwagen lediglich auf seiner linken Seite mit einem als Bremspedal 81 ausgebildeten Kipphebel versehen. Dieses Bremspedal ist genauso ausgeführt wie das zuvor gemäß Figur 1 beschriebene. Auf der rechten Seite des Servierwagens ist hingegen lediglich ein einfacher Kipphebel 91 vorgesehen, der also nicht als Pedal betätigt werden kann. Dieser Kipphebel 91 entspricht mit seinen Stützflächen 11, 13 den Stützflächen 10, 12 des Bremspedals 81. Der Kipphebel 91 ist hierbei gleichsinnig zum Bremspedal 81 angeordnet. Das bedeutet, daß dieser Kipphebel 91 nicht als Bremspedal ausgebildet werden kann, daß somit dieser Servierwagen lediglich von seiner linken Seite her zur Bedienung geeignet ist. Bremspedal 81 und Kipphebel 91 sind wiederum durch eine Kopplungsstange 18 gekoppelt, die dicht an der Bodenplatte 1 verläuft und sowohl beim Bremspedal 81 wie auch beim Kipphebel 91 auf gleiche Weise im Lager der Rollen 14, 15 angelenkt ist. Dies ist möglich, da der Kipphebel 91 gleichsinnig zum Bremspedal 81 angeordnet ist.

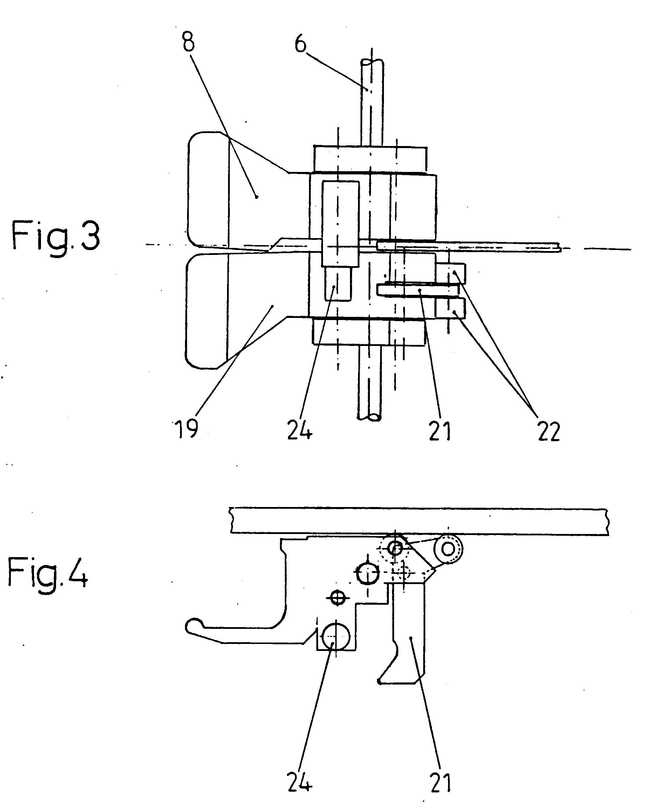

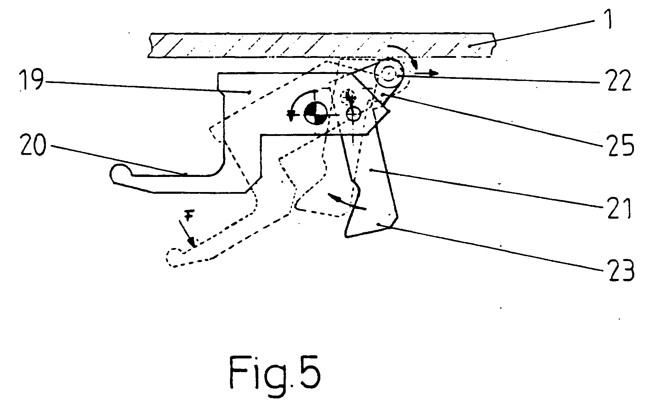

Gemäß Figur 3, 4 und 5 ist neben dem Bremspedal 8 auf der Bremsstange 6 ein spezielles Bremslösepedal 19 gelagert. Dieses Bremslösepedal 19 ist auf seinem der Trittfläche 20 abgekehrten Ende mit einem Winkelhebel 21 gelenkig verbunden. Dieser Winkelhebel 21 liegt mit einer Rolle 22, die an seinem einen Ende 25 vorgesehen ist, an der Unterseite der Bodenplatte 1 an. Das andere freie Ende 23 des Winkelhebels 21 greift hinter einen Mitnehmer 24 des Bremspedals 8. Wird also das Bremslösepedal 19 nach unten getreten, so dreht der Winkelhebel 21 die Drehbewegung des Bremslösepedals 19 um und trifft mit seinem freien Ende 23 auf den Mitnehmer 24 und wirft so das Bremspedal 8 raus. Diese Stellung ist in Figur 5 eingestrichelt.

## Patentansprüche

1. Servierwagen mit rechteckigem Boden (1), insbesondere für Verkehrsflugzeuge, der an jeder Ecke des Bodens angeordnete Fahrrollen (4, 5) besitzt, mit folgenden Merkmalen:
die Fahrrollen (4, 5) sind mittels zweier unterhalb des Bodens im wesentlichen parallel zur Stirnseite (2, 3) verlaufender in senkrechten Führungsschlitzen je zweier Haltewinkel verschiebbar angeordneter Bremsstangen (6, 7) blockierbar
jede Bremsstange (6, 7) wird durch Federkraft in Richtung Boden (1) gedrückt
jede Bremsstange (6, 7) ist mittels je eines Kipphebels (8, 9), der zwischen den Haltewinkeln auf der Bremsstange gelagert ist, betätigbar
jeder Kipphebel (8, 9) besitzt zwei in einem stumpfen Winkel ineinander übergehende Stützflächen (10, 11, 12, 13) unterschiedlichen Abstandes zur Drehachse des Kipphebels, von denen entweder die eine (z.B. 10, 11) oder die andere (z.B. 12, 13) an der Unterseite des Bodens (1) zur Anlage gelangt
die Stützfläche (12, 13) mit dem größeren Abstand zur Drehachse (6, 7) reicht bei Anlage an der Unterseite des Bodens über die Wirklinie (16) der Federkraft hinaus
wenigstens ein Kipphebel (8, 9) ist als Fußpedal ausgebildet
die Kipphebel (8, 9) beider Stirnseiten sind mittels eines an der Unterseite des Bodens verlaufenden Gestänges (17) miteinander gekoppelt
**dadurch gekennzeichnet**,
daß bei gegensinnig angeordneten Kipphebeln (8, 9) das Gestänge aus nur einer zug- und druckbelastbaren Stange (17) besteht, die an dem einen Kipphebel (8) oberhalb seiner Lagerstelle (6) und am anderen Kipphebel (9) unterhalb dessen Lagerstelle (7) angelenkt ist.

2. Servierwagen gemäß Oberbegriff des Schutzanspruches 1,
**dadurch gekennzeichnet**,
daß die Kipphebel (81, 91) beider Stirnseiten gleichsinnig angeordnet sind, wobei der Kipphebel, dessen die gelöste Stellung bestimmende Stützfläche (10) nach außen gerichtet ist, als Bremspedal (81) ausgebildet ist, und daß eine unmittelbar an der Unterseite der Bodenplatte (1) verlaufende Zug/Druckstange (18) vorgesehen ist, die jeweils oberhalb der Lagerstellen (6, 7) der beiden Kipphebel (81, 91) an den Kipphebeln angelenkt ist.

3. Servierwagen nach Anspruch 1 oder 2,
**dadurch gekennzeichnet**,
daß an der Übergangslinie der beiden Stützflächen (10, 12 bzw. 11, 13) des Kipphebels (8 bzw. 9 und 81 bzw. 91) mindestens eine an der Unterseite des Bodens (1) anliegende Rolle (14, 15) vorgesehen ist.

4. Servierwagen nach Anspruch 1 oder 2 oder 3,
**dadurch gekennzeichnet**,
daß neben dem als Bremspedal (8, 9, 81) ausgebildeten Kipphebel ein ebenfalls auf der Bremsstange (6, 7) gelagertes Bremslösepedal (19) angeordnet ist, an dessen der Trittfläche (20) abgekehrten Ende ein die Drehrichtung des Bremslösepedals umkehrender Winkelhebel (21) angelenkt ist, der sich mit seinem einen Ende an der Unterseite des Bodens abstützt und dessen anderes Ende (23) hinter einem Anschlag (24) des Kipphebels liegt.

## Claims

1. Catering trolley with rectangular base (1), used in particular for passenger aircraft, that has castors (4, 5) which are arranged on each end of the trolley base, with the following characteristics:
the castors (4, 5) are blockable by means of two break rods (6, 7) which are positioned below the base plate parallel to the fronts (2, 3) and which are each displaceable in vertical guiding slots of two mountings
every break rod (6, 7) is pressed by the power of a spring in direction of the base plate
every break rod (6, 7) can be actuated by means of a rocking lever (8, 9), which is supported on the break rod between two mountings
every rocking lever (8, 9) posesses two supporting surfaces (10, 11, 12, 13) which shift in an obtuse angle from one to the other and are located in different distances to the turning axis of the rocking lever, of which either one (e.g. 10, 11) or the other (e.g. 12, 13) comes into contact with the bottom of the base plate 1
the supporting surface (12, 13) with the larger distance to the turning axis (6, 7) which comes into contact with the bottom of the base plate exceeds the line of action (16) of the springload
at least one rocking lever (8, 9) acts as foot pedal
the rocking levers (8, 9) of both fronts are coupled by means of a connecting rod (17) which is positioned at the bottom of the base plate
**thus characterized**
that in case of counter sense arranged rocking levers (8, 9) the connecting rod consists only out of one tensile and compressive loaded rod (17), which is hinged to one rocking lever (8) above his point of support (6) and to the other rocking lever (9) beyond his point of support (7).

2. Catering trolley according to the superior term of claim 1,
**thus characterized**,
that the rocking levers (81, 91) of both front ends are arranged in the same sense, whereby that rocking lever is designed as break pedal (81), whose release defining supporting surface (10) is oriented outwards, and that a tensile/compressive loaded rod (18) is assigned, that runs directly at the bottom of the base plate (1) and which is hinged in each case above the supporting points (6, 7) of the both rocking levers (81, 91) to the rocking levers.

3. Catering trolley according to claim 1 or 2,
**thus characterized**,
that at the transition line between the two supporting surfaces (10, 12, or 11, 13 respectively) of the rocking lever (8 respectively 9 and 81 respectively 91) at least one pulley (14, 15) is assigned, which is in contact with the bottom of the base plate (1).

4. Catering trolley according to claim 1 or 2 or 3,
**thus characterized**,
that besides the rocking lever, which is designed as break pedal (8, 9, 81), a likewise on the break rod (6, 7) supported release pedal (19) is arranged, which is hinged, on the end oposite to the tread surface (20), to a bend lever (21) that reverses the swivelling motion of the release pedal and that supports with one end on the bottom of the base plate and extends with the other end (23) behind a carrier (24) of the rocking lever.

## Revendications

1. Table roulante avec un plancher rectangulaire (1), notamment pour des avion de ligne, comportant à chacque angle du plancher, des galets de roulement (4, 5), avec les caractéristiques suivantes:
les galets de roulement (4, 5) sont susceptibles d'etre bloqués au moyen de deux tiges de freinage (6, 7) s'étendant au-dessous du plancher en étant essentiellement parallèles aux côtés frontaux (2, 3) et disposés de facon à pouvoir coulisser dans les fentes de guidage veticales de respectivement deux cornières de maintien,
chaque tige de freinage (6, 7) est poussée en direction du plancher (1) par des ressorts,
chaque tige de frein (6, 7) est susceptible d'etre actionnée au moyen de respectivement un levier basculant (8, 9) qui est monté sur la tige de freinage entre les cornières de maintien,
chaque levier basculant (8, 9) comporte deux surfaces d'appui (10, 11, 12, 13) se raccordant l'une à l'autre selon un angle obtus et se trouvant à des distances différentes de l'axe de rotation du levier basculant, l'une de ces surfaces (par exemple 10, 11) ou bien l'autre (par exemple 12, 13) venant s'appliquer contre la face interne du plancher (1),
la surface d'appui (12, 13) dont la distance à l'axe de rotation (6, 7) est la plus grande, s'etend, lorsqu'elle s'applique contre la face inférieure du plancher, au-delà de la ligne d'action (16) des ressorts,
au moins un levier basculant (8, 9) revet la forme d'une pédale,
les leviers basculants (8, 9) des deux côtés fronteaux sont couplés ensemble au moyen d'une tringlerie (17) s'étendant contre la face inférieure du plancher,
table roulante **caractérisée en ce que**
lorsque les leviers basculants (8, 9) sont disposés en sens inverses, la tringlerie est uniquement constituée par une tige (17), susceptible d'etre sollicitée à la traction et à la compression, et qui est articulée à l'un des leviers basculants (8) au-dessus de l'axe de rotation (6) de ce levier, et à l'autre levier basculant (9) au-dessous de l'axe de rotation (7) de ce levier.

2. Table roulante selon le préambule de la revendication 1,
**caractérisée en ce que**
les leviers basculants (81, 91) des deux côtés frontaux sont disposées dans le même sens, auquel cas, le levier basculant dont la surface d'appui (10), déterminant la position "déclenchée", et dirigée vers l'extérieur, est réalisé sous la forme d'une pédale de frein (81), tandis qu'l est prévu une tige de traction et de compression (18) s'étendant contre la face inférieure de la plaque de plancher (1), et qui est respectivement articulée aux leviers basculants au-dessus des axes de rotation (6, 7) des deux leviers basculants (81, 91).

3. Table roulante selon la revendication 1 ou la revendication 2,
**caractérisée en ce que**
sur la ligne de raccordement des deux surfaces d'appui (10, 12 ou bien 11, 13) du levier basculant (8 ou bien 9 et 81 ou bien 91), il est prévu au moins un galet (14, 15) s'applicant contre la face inférieure du plancher (1).

4. Table roulante selon la revendication 1 ou la revendication 2 ou la revendication 3,
**caractérisée en ce que**
à côté du levier basculant revetant la forme d'une pédale de frein (8, 9, 81), est disposée une pédale de relachement du frein (19), également montée sur la tige de freinage (6, 7), à laquelle est artticulée, à l'extrémité opposée à la surface (20) sur laquelle on met le pied, un levier coudé (21) inversant le sens de rotation de la pédale de relachement du frein, et qui s'appuie par une de ses extrémités contre la face inférieure du plancher, tandis que son autre xtrémité se situe derrière une butée (24) du levier basculant.
